# EUROPEAN PATENT APPLICATION

(11) **EP 2 164 197 A1**
(43) Date of publication of application: **17.03.2010**
(21) Application number: 07767902.5
(22) Date of filing: 29.06.2007
(51) Int. Cl.: H04J 11/00, H04J 1/00, H04L 1/00

(54) **FAULT DETECTION METHOD AND DEVICE FOR RADIO RESOURCE**

(71) Applicant: Fujitsu Limited, Kawasaki-shi, Kanagawa 211-8588 (JP)
(72) Inventor: YONETA, Tsuyoshi, Kawasaki-shi Kanagawa 211-8588 (JP)
(74) Representative: Fenlon, Christine Lesley
(86) International application number: PCT/JP2007/063115
(87) International publication number: WO 2009/004681

(57) **Abstract**

A sub-carrier frequency block forming a wireless resource is assigned to a downlink transmission data by a scheduling (schedule processing) based on a wireless communication method dynamically utilizing the wireless resource among a plurality of users. Sub-frame data of the sub-carrier frequency block assigned is transmitted and a retransmission request signal received in response to the transmitting is recorded as an error detection. When the error detection recorded consecutively occurs at a specific sub-carrier frequency block, it is determined that a fault occurs at the specific sub-carrier frequency block. For uplink reception data, uplink sub-frame data is received at the sub-carrier frequency block similarly assigned and an error detection is recorded. When the error detection recorded consecutively occurs at the specific sub-carrier frequency block, it is determined that a fault occurs at the specific sub-carrier frequency block.

## Description

### Field of art

The present invention relates to a fault detection method and apparatus of wireless resource in a wireless (radio) base station apparatus (equipment) to which an OFDMA (Optical Frequency Division Multiple Access) system or the like is applied.

### Background art

In a configuration where uplink (upward) and downlink (downward) wireless resources are exclusively used by a specific mobile terminal like a mobile telephone system to which a PDC (Personal Digital Cellular) system or a W-CDMA (Wideband Code Division Multiple Access) system as a wireless communication system having been heretofore used is applied, it is possible to detect a fault occurring in a specific wireless resource by monitoring communications with an opposed wireless communication apparatus.

On the other hand, Evolved UTRA and UTRAN are currently being studied for the next generation mobile telephone system in 3 GPP (3^{rd} Generation Partnership Project). For the wireless communication system thereof, the OFDMA system is adopted particularly for the downlink signal. Also, the OFDMA system is utilized in a wireless LAN including mobile WiMAX etc.

This OFDMA system has a configuration where in the downlink signal a large number of sub-carrier frequencies forming wireless resources are divided into some bundles of sub-carriers called resource blocks (sub-carrier frequency blocks) and are dynamically used among a plurality of users by sub-carrier frequency block.

Namely, the assignment of the sub-carrier frequency block is changed with each passing moment, so that a certain user focused is to use a variety of sub-carrier frequency blocks during a single call.

It is to be noted that there is a multiplexer and a failure spot specifying method for separating a spot free from failure and a failed spot (see e.g. Japanese Laid-open Patent Publication No.2004-336639). In this Publication, a network managing part instructs a transmission control part and a reception control part to respectively transmit and receive data thereby to collect information of a network state. The network managing part periodically transmits test data on the basis of the collected information so as to make the reception control part monitor the data reception. A storing part of the network management part stores data of a communication pattern, a failure spot at the time of a failure occurrence and transmittable and receivable transmission/reception patterns at the time of the failure occurrence. When a failure occurs, the network managing part collates the UDs of NICs with the transmittable and receivable transmission/reception patterns stored in the storing part to specify the failure spot that has occurred.

### Disclosure of the invention

### Problem to be solved by the invention

Generally, even in case that some fault occurs in a transmitting system (part) or a receiving system (part) of a wireless communication apparatus, it is hard for the wireless communication apparatus itself to detect it. Also, the aforementioned wireless base station apparatus to which the wireless communication system such as the OFDMA system is applied dynamically utilizes the sub-carrier frequency blocks, so that even though the wireless base station apparatus monitors only the communication with an opposed specific mobile terminal, the base station apparatus can not detect a fault of the wireless resources by sub-carrier frequency block.

On the other hand, for stably operating the system, it becomes necessary to detect such a fault of the base station apparatus as soon as possible and to exchange faulted parts or the like.

It is accordingly an object in one aspect of the present invention to provide a method and apparatus for detecting a fault of a wireless resource dynamically used among a plurality of users by sub-carrier frequency block.

### Means for solving the problem

In order to solve the above object, a fault detection method (or apparatus) of wireless resource according to the present invention comprises: assigning (or an assigning portion assigning) a sub-carrier frequency block forming a wireless resource to a downlink transmission data by scheduling based on a wireless communication system enabling a plurality of users to dynamically utilize the wireless resource; transmitting (or a transmitting portion transmitting) sub-frame data in the sub-carrier frequency block assigned; recording (or a recording portion recording) as an error detection a retransmission request signal received in response to the transmitting of the sub-frame data; and determining (or a determining portion determining) that a fault occurs at a specific sub-carrier frequency block when the error detection recorded consecutively occurs at the specific sub-carrier frequency block.

Namely, the present invention performs scheduling processing (herein, simply referred to as "scheduling") based on a wireless communication system (method) enabling a plurality of users to dynamically utilize a wireless resource when e.g. downlink transmission data are transmitted to a mobile terminal, at which time a sub-carrier frequency block (resource block) forming the wireless resource is assigned.

After sub-frame data in the sub-carrier frequency block thus assigned have been transmitted to the mobile terminal and when the reception of the sub-frame data is failed at the mobile terminal, the mobile terminal transmits a retransmission request signal in response to the transmission of the sub-frame data. In this case, the retransmission request signal is recorded as an error detection. When it is found from the recording that the error detection consecutively occurs at a specific sub-carrier frequency block, it is determined that a fault occurs at the specific sub-carrier frequency block.

Thus, a fault in the transmitting system of the wireless base station apparatus or the like can be detected by not focusing on a communication status per call but focusing on the sub-carrier frequency block forming the minimum unit of resource assignment, by monitoring the communication state for each sub-carrier frequency block and by associating with all mobile terminals communicating with the base station apparatus.

Also a fault detection method (or apparatus) of wireless resource according to the present invention comprises: assigning (or an assigning portion assigning) a sub-carrier frequency block forming the wireless resource to an uplink reception data in response to a reception request by scheduling based on a wireless communication system enabling a plurality of users to dynamically utilize the wireless resource; receiving (or a receiving portion receiving) sub-frame data in the reception data at the sub-carrier frequency block assigned; recording (or a recording portion recording) an error detection in the sub-frame data received; and determining (or a determining portion determining) that a fault occurs at a specific sub-carrier frequency block when the error detection recorded consecutively occurs at the specific sub-carrier frequency block.

Namely, a fault detection of the wireless resource for e.g. uplink reception data from the mobile terminal to the base station apparatus is now made, in which when a reception request is received from e.g. the mobile terminal, the assignment of the sub-carrier frequency block (resource block) is also performed by the above-noted scheduling based on the wireless communication system. When uplink sub-frame data from the mobile terminal are received at the sub-carrier frequency block assigned, an error detection in the sub-frame data received is also made and recorded. When it is found that the error detection recorded consecutively occurs at a specific sub-carrier frequency block, it is determined that a fault occurs at the specific sub-carrier frequency block.

In this way, it becomes possible to detect a fault of a specific sub-carrier frequency block in the receiving system of the wireless base station apparatus or the like even though the wireless resource is dynamically varied among a plurality of users as with the transmitting system of the wireless base station apparatus or the like.

Also, the above determining (or determining portion) may determine that a fault does not occur when a mobile terminal using the specific sub-carrier frequency block is a same terminal even though the error detection continues for a fixed time duration (interval) or a fixed number of times at the specific sub-carrier frequency block.

Namely, upon detecting a fault of the sub-carrier frequency block by the above determining (or determining portion), if it is found that the mobile terminal using the sub-carrier frequency block is the same terminal even though the error detection continues for a fixed time duration or a fixed number of times, the fault can be regarded as the one of the mobile terminal itself but not as the one of the transmitting system or the receiving system itself of the base station apparatus, so that the determining (or determining portion) determines that no faults occur, thereby excluding miss-detection of a fault.

Also, the determining (or determining portion) may determine that no faults occur when the use number of times of the specific sub-carrier frequency block is equal to or more than a fixed number of times even though the error detection continues for a fixed time duration or a fixed number of times at the specific sub-carrier frequency block.

Namely, even though the error detection indicating the continuation for a fixed time duration or fixed number of times at the sub-carrier frequency block is made, if the use number of times of the sub-carrier frequency block is equal to or more than a fixed number of times, the determining (or determining portion) determines that the occurrence frequency of the fault is low so that no faults occur, thereby excluding miss-detection of a fault.

Also, the above-noted method (or apparatus) may further comprise not assigning (or a portion not assigning) the specific sub-carrier frequency block faulted in the scheduling after having detected the specific sub-carrier frequency block where a fault occurs, as noted above.

Namely, when the sub-carrier frequency block faulted is detected, the next scheduling performs the scheduling by dodging the sub-carrier frequency block faulted, so that more efficient wireless communications can be realized.

It is to be noted that the above wireless communication system is for example an OFDMA system.

### Effect of the invention

According to the present invention, it becomes possible to detect a fault relating to a transmitting system and a receiving system of a wireless base station apparatus having been difficult to be detected so far and to promote the initial operation at the occurrence time of the fault, resulting in that more stable mobile telephone services can be offered. Even in case that a fault occurs, only the part of the sub-carrier frequency block faulted can be eliminated from the operation, improving the reliability effecting the system operations.

### Best mode for implementing the invention

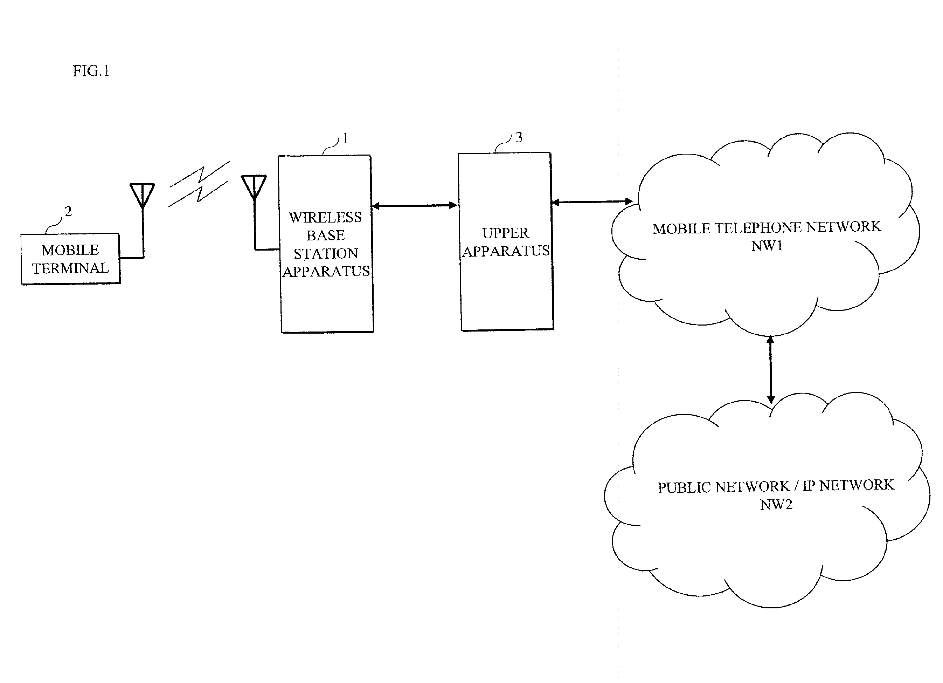

### Overall system arrangement: Fig.1

Fig.1 depicts a general system arrangement, particularly a cellular mobile telephone system for a fault detection method and apparatus of wireless resource according to the present invention. This system forms a service area with a plurality of base station apparatuses 1 to which the present invention is applied, enabling mobile terminals 2 to be communicated with each other or to be communicated with stationary terminals (not depicted) by transmitting/receiving a wireless signal. The base station apparatus 1 is connected through an upper apparatus 3 to a mobile telephone network NW1, and connected to a public network (IP network) NW2 through the mobile telephone network NW1.

Respective internal arrangements of the base station apparatus 1 and the mobile terminal 2 depicted in Fig.1 are specifically depicted in Figs.2 and 3.

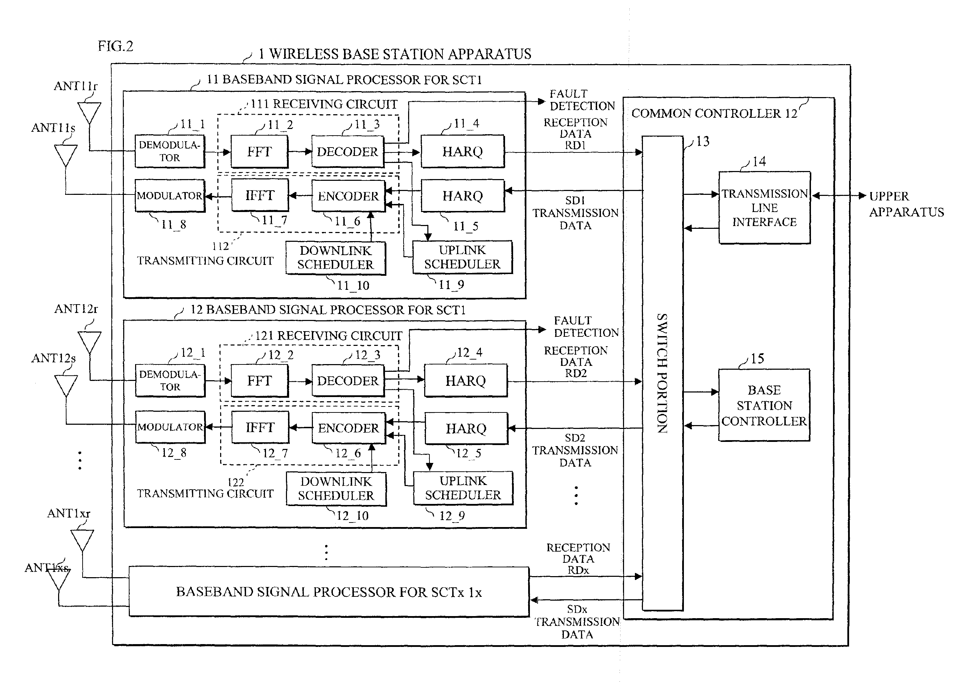

### Arrangement of base station apparatus: Fig.2

The base station apparatus 1 depicted in Fig.2 is an OFDMA-based system, comprising baseband signal processors 11-1x respectively provided for sectors SCT1-SCTx (not depicted) of a plural number "x" and a common controller 12 in common to the baseband signal processors 11-1x.

The baseband signal processor 11 for the sector ST1 has a receiving system connected to a receiving antenna ANT11r to transmit reception data RD1 to the common controller 12, this receiving system being formed of a modulator 11_1, a Fast Fourier Transform (hereinafter, abbreviated as FFT) portion 11_2, a demodulator 11_3 and an uplink Hybrid Automatic Repeat reQuest (retransmission request: hereinafter, occasionally abbreviated as HARQ) processor 11_4.

Also, a transmitting system for transmitting downlink transmission data to a transmitting antenna ANT11s in response to transmission data SD1 from the common controller 12 is formed of a downlink HARQ processor 11_5, an encoder 11_6, an Inverse Fast Fourier Transform (hereinafter, occasionally abbreviated as IFFT) portion 11_7 and a modulator 11_8.

This baseband signal processor 11 further comprises an uplink scheduler 11_9 performing a predetermined uplink scheduling for the encoder 11_6 based on an HARQ signal detected by the demodulator 11_3 and a downlink scheduler 11_10 performing a predetermined downlink scheduling in cooperation with the encoder 11_6.

The reception data RD1 from the uplink HARQ processor 11_4 in the baseband signal processor 11 are sent to a switch portion 13 in the common controller 12 and then transmitted to the upper apparatus 3 through a transmission line interface 14. Also, data from the upper apparatus 3 are sent as the transmission data SD1 to the downlink HARQ processor 11_5 through the transmission line interface 14 and the switch portion 13. It is to be noted that the common controller 12 is provided with a base station controller 15 which makes the switch portion 13 control the transmission/reception data in association with the sectors.

The baseband signal processor 12 for the sector SCT2 has, as with the above baseband signal processor 11, a receiving system composed of a modulator 12_1, an FFT portion 12_2, a demodulator 12_3 and an uplink HARQ processor 12_4, and has a transmitting system composed of a downlink HARQ processor 12_5, an encoder 12_6, an IFFT portion 12_7 and a modulator 12_8, together with an uplink scheduler 12_9 and a downlink scheduler 12_10. The demodulator 12_1 is connected to an receiving antenna ANT12r and the modulator 12_8 is connected to a transmitting antenna ANT12s, in which reception data RD2 from the uplink HARQ processor 12_4 are sent to the switch portion 13 in the common controller 12 and transmission data SD2 from the switch portion 13 are sent to the downlink HARQ processor 12_5.

The baseband signal processors 13-1x for the sectors SCT3-SCTx have the same arrangement respectively. Accordingly, the baseband signal processor 1x for the sector SCTx of which internal arrangement is not depicted is connected to a receiving antenna ANTlxr and a transmitting antenna ANT1xs so that reception data RDx and transmission data SDx are transferred with the switch portion 13 in the common controller 12.

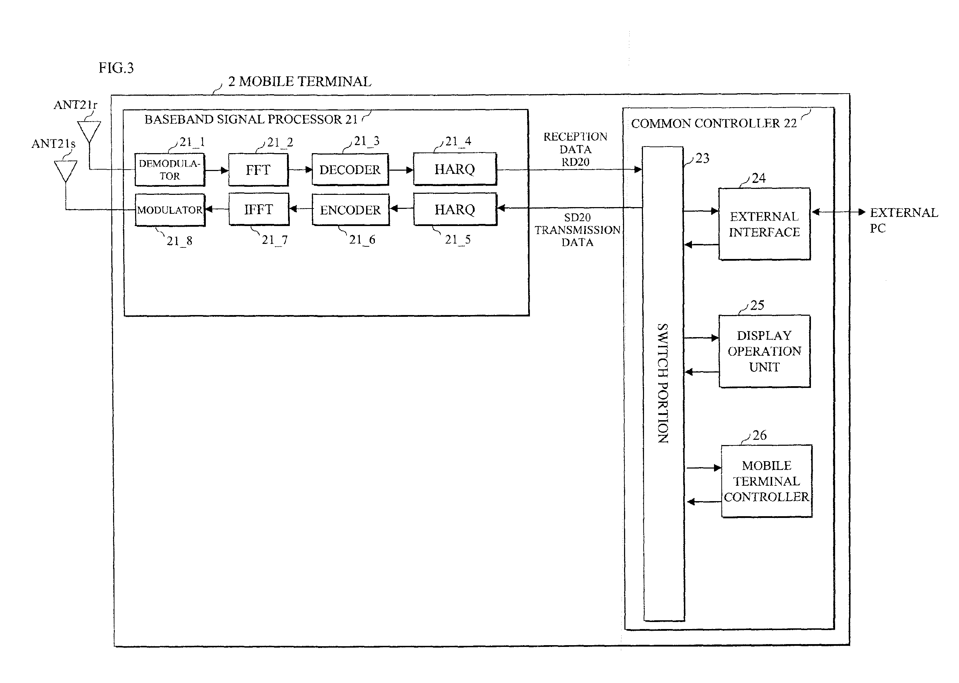

### Arrangement of mobile terminal: Fig.3

Fig.3 depicts a general arrangement of the known OFDMA-based mobile terminal 2. This mobile terminal 2 has, as with the baseband signal processors 11_1x depicted in Fig.2, a receiving system formed of a modulator 21_1, an FFT portion 21_2, a demodulator 21_3 and an uplink HARQ processor 21_4, as well as a transmitting system formed of a downlink HARQ processor 21_5, an encoder 21_6, an IFFT portion 21_7 and a modulator 21_8, where this mobile terminal 2 is not provided with an uplink scheduler and a downlink scheduler.

Also, reception data RD20 from the uplink HARQ processor 21_4 in the baseband signal processor 21 are sent to a switch portion 23 provided in the common controller 22 and then sent to an external computer or the like through an external interface 24. Transmission data SD20 from the switch portion 23 are sent to the downlink HARQ processor 21_5. In the common controller 22, a display operation unit 25 and a mobile terminal controller 26 are further provided and connected to the switch portion 23.

### Overall operation of base station apparatus: Figs.2-4

In the operation of the base station apparatus 1 depicted in Fig.2, downlink transmission data received from the upper apparatus 3 are transferred through the transmission line interface 14 and the switch portion 13 to e.g. the downlink HARQ processor 11_5 in the baseband signal processor 11 for the sector SCT1 as the transmission data SD1.

The encoder 11_6 having received the transmission data SD1 from the downlink HARQ processor 11_5 controlling the retransmitting operation performs an error correction encoding to the transmission data per user according to instructions by the downlink scheduler 11_10. The information encoded by the encoder 11_6 is inverse-fast-Fourier-transformed at the IFFT portion 11_7 to obtain a signal sampled on a time axis, modulated by the modulator 11_8, amplified and transmitted from the transmitting antenna ANT11s.

A signal received from the mobile terminal 2 is provided to the demodulator 11_1 where it is detected through the receiving antennal ANT11r, fast-Fourier-transformed at the FFT portion 11_2 to obtain discrete frequency spectrum data (indicating the magnitude of a spectrum per frequency) and is then subjected to an error correction decoding by the decoder 11_3. By this decoding, data per user are extracted, the retransmission operations for the reception data are performed at the uplink HARQ processor 11_4 and the encoder 11_6 is controlled by the uplink scheduler 11_9 based on information such as the decoded result of the reception data.

Such an operation at the baseband signal processor 11 is to be similarly performed in the other baseband signal processors 12-1x.

It is to be noted that while the data are transferred on a sub-carrier frequency basis between the encoder 11_6 and the IFFT portion 11_7 in the baseband signal processor 11, an error biased toward a specific sub-carrier frequency block may occur due to a defect in a part of a memory (not depicted) or the like for the transferring therebetween.

This also applies to a relationship between the FFT portion 11_2 and the decoder 11_3 in the uplink. Besides, it is possible that a fault occurs in a specific sub-carrier frequency if the encoder 11_6 or the decoder 11_3 is structured in a hardware form processed by sub-carrier frequency.

Namely, it is highly possible that a fault occurs by sub-carrier frequency in a receiving circuit 111 (including the FFT portion 11_2 and the decoder 11_3) and a transmitting circuit 112 (including the encoder 11_6 and the IFFT portion 11_7) depicted by dotted lines in the baseband signal processor 11.

This also applies to a receiving circuit 121 and a transmitting circuit 122 shown by dotted lines in the baseband signal processor 12.

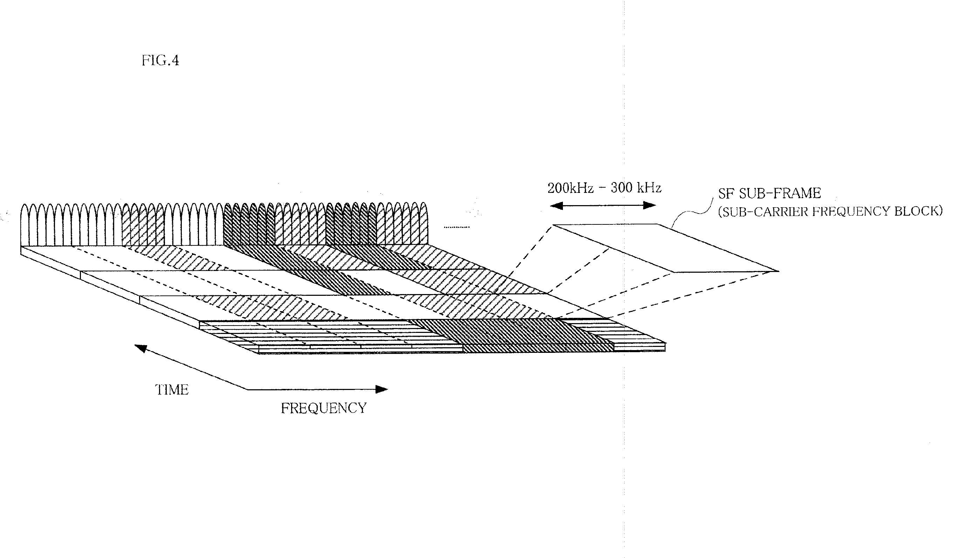

Therefore, according to the present invention, at the time of scheduling executed by e.g. the schedulers 11_9 and 11_10 in the baseband signal processor 11, when communications between the base station apparatus 1 and the mobile terminals 2 are performed by sub-frame SF (sub-carrier frequency block or resource block) obtained by dividing or blocking the sub-carrier frequency, per fixed time duration, forming the minimum unit among assigned units of the wireless resources depicted in Fig.4, the fault detection is performed based on errors occurring in the sub-carrier frequency blocks by taking advantage of a feedback signal or receiving signal from the mobile terminal 2.

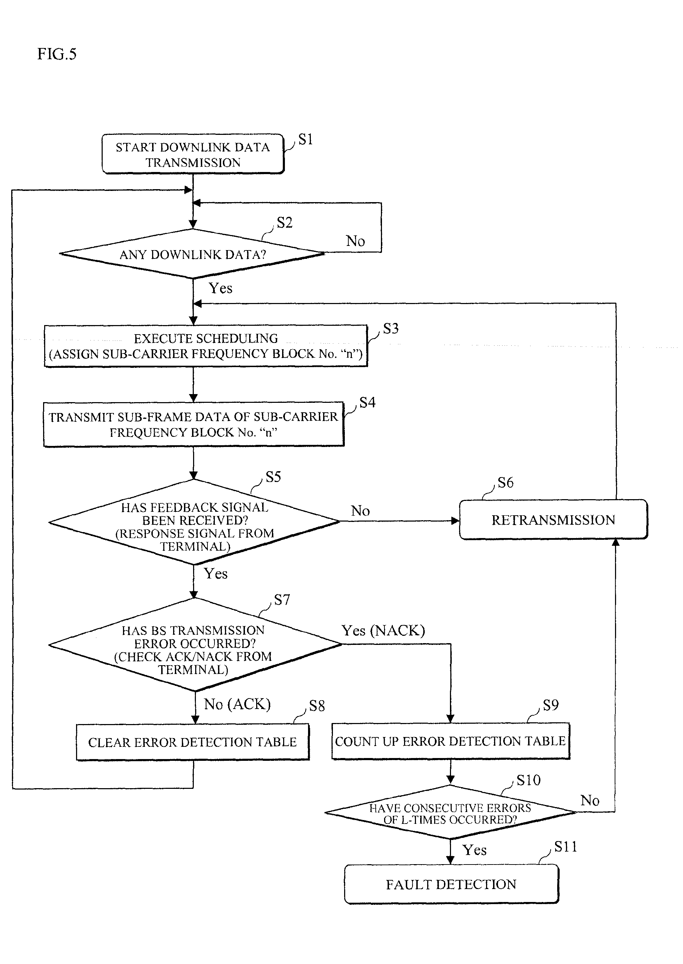

Hereinafter, a fault detection algorithm of wireless resource in the base station apparatus 1 will be described referring to Figs.5-13.

### [1] Fault detection in transmitting system: Figs. 5-10

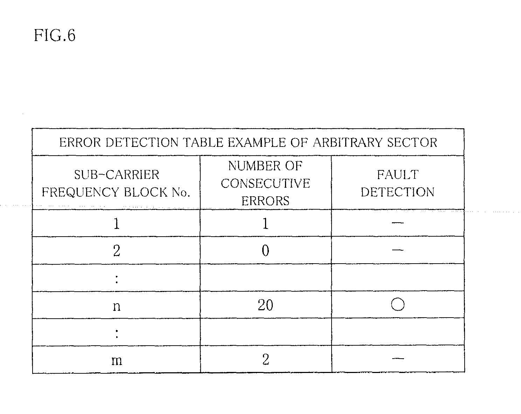

### *Embodiment (1): Figs.5 and 6

In the example of the transmitting circuit 112, the transmitting operation for the downlink transmission data is started at the encoder 11_6 (step S1), where in the presence of the downlink transmission data (step S2) the scheduling is performed in cooperation with the downlink scheduler 11_10 (step S3). At this time, the encoder 11_6 designates one of the sub-carrier frequency blocks depicted in Fig.4 and assigns it with e.g. No."n".

The sub-frame data of the sub-carrier frequency block No."n" thus assigned are transmitted (step S4), at which time the decoder 11_3 waits for the feedback signal to be transmitted from the mobile terminal 2 (step S5).

Consequently, in the absence of the feedback signal, that is a response signal from the mobile terminal 2, the decoder 11_3 executes the normal retransmitting (HARQ) operation through the uplink HARQ processor 11_4 (step S6).

On the other hand, having received the feedback signal from the mobile terminal 2, the decoder 11_3 determines based on an ACK signal or NACK signal from the mobile terminal 2 whether or not the feedback signal indicates a transmission error caused by the base station apparatus 1 itself (step S7).

As a result, when no transmission error is found to have occurred, namely the ACK signal has been received, an error detection table provided in e.g. the decoder 11_3 is cleared (step S8).

One example of this error detection table is depicted in Fig.6, in which this table indicates a fault detection by counting the number of consecutive errors with respect to each of "m" sub-carrier frequency blocks with reference to a fixed threshold value.

Having received the NACK signal indicating the occurrence of the transmission error at step S7, the decoder 11_3 counts up the number of consecutive errors in the error detection table depicted in Fig.6 (step S9). Then, it is checked whether or not the number of consecutive errors counted up has reached a predetermined number of times (sampling times) L (step S10), where this predetermined value L may be replaced by a fixed time duration.

As a result, if it is found that the error does not consecutively occur for the number of times L, the uplink HARQ processor 11_4 performs the retransmitting operation (step S6) but if it is found that the error consecutively occurs for the number of times L, where e.g. the sub-carrier frequency block No."n" assumes the number of consecutive error times 20 as depicted in Fig.6, reaching the threshold value L=20 times, it is determined to be a fault detection (step S11).

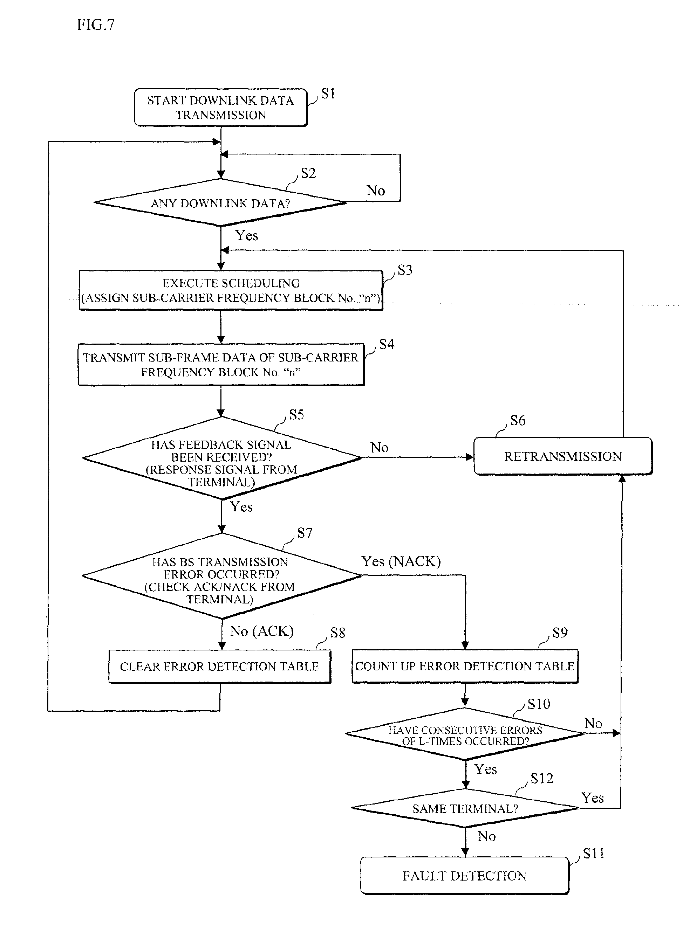

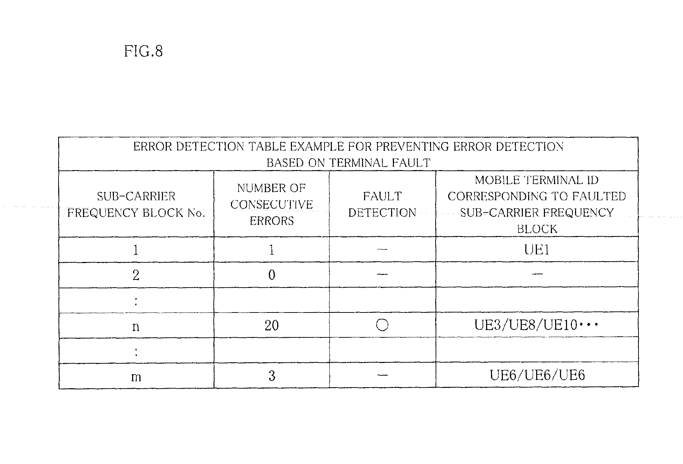

### *Embodiment (2): Figs.7 and 8

This embodiment is different from the above embodiment (1) in that step S12 is added to the flow chart depicted in Fig. 5 as depicted in the flow chart of Fig.7 and the error detection table is added with "Terminal ID" (identifier of a mobile terminal corresponding to the sub-carrier frequency block faulted) as depicted in Fig. 8.

Namely, after the detection of the error occurrence for the number of consecutive times L at step S10, the decoder 11_3 does not determine a fault detection immediately (step S11) but instead a mobile terminal ID corresponding to the sub-carrier frequency block faulted is stored as depicted in Fig.8 and then determines whether or not an error in a specific mobile terminal is detected at a specific sub-carrier frequency block (step S12).

Consequently, if it is found that at the sub-carrier frequency block No."n", the error detection for the number of consecutive time L=20 indicates unspecified mobile terminal, it is determined as a fault detection (step S11), whereas if it is found that it indicates a specific mobile terminal, the flow chart proceeds to step S6. Therefore, even when the number of error detection times at a specific mobile terminal exceeds the predetermined number L, it is not determined as a fault detection. It is a matter of course that as depicted, even upon the error detection from the mobile terminal UE6, it is not determined as a fault detection since the number of error consecutive times "3" < L.

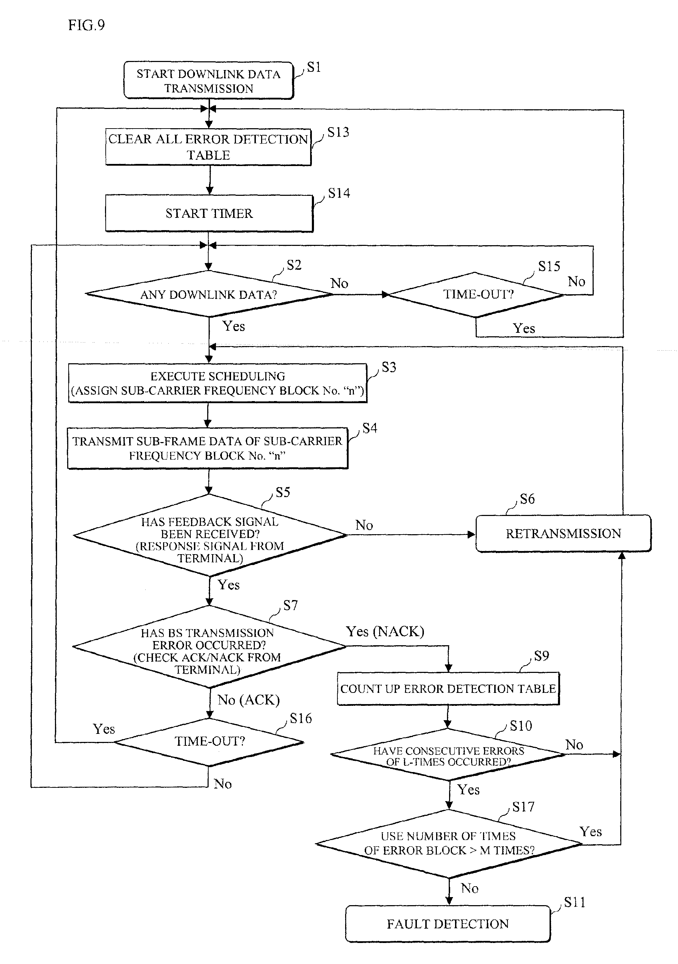

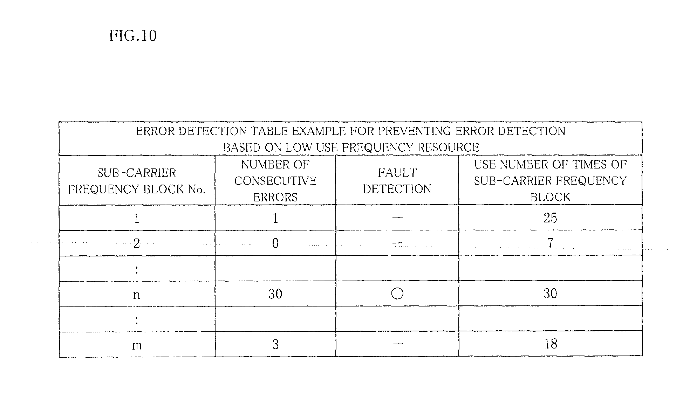

### *Embodiment (3): Figs.9 and 10

This embodiment is different from the embodiment (1) in that steps S13-S17 are added to the flow chart of Fig.5 as depicted in Fig.9 and "use number of times of sub-carrier frequency block" is added to the table in Fig.6 as depicted in the error depicted table of Fig. 10.

Namely, in the process from step S1 to step S2, the data in the error detection table are all cleared (step S13) and a timer is started (step S14). This timer is provided to define a signal standby time.

In the absence of the downlink transmission data at step S2, the timer time is determined or checked (step S15), where before reaching a fixed time duration the flow chart returns to step S2 while after lapse of the fixed time duration, the flow chart returns to step S13 to repeat from the start.

This timer time is compared with the fixed time duration even when the ACK signal indicating non-occurrence of the transmission error at step S7 (step S16), so that before the timer time lapses, the flow chart returns to step S2 while after the fixed time duration lapses, the flow chart returns to step S13 as with the above case.

Furthermore, even when the error occurrence for the number of consecutive times L is detected at step S17, the decoder 11_3 compares the use number of times of the sub-carrier frequency block as erred with a predetermined value M (step S17).

Namely, by referring to the use number of times of the sub-carrier frequency block depicted in the error detection table of Fig.10, even in the event of error occurrence for the number of consecutive times L being found at step S10, the HARQ processing (execution of step S6) is performed and returned to step S3 when the use number of times of the sub-carrier frequency block No."n" as erred exceeds e.g. the threshold value M=50.

Meanwhile, when the use number of times of the sub-carrier frequency block No."n" exceeds a threshold value ML=30, it is determined as a fault detection (step S11).

Namely, the fault detection is determined when the number of times of consecutive error detection is large for the use frequency.

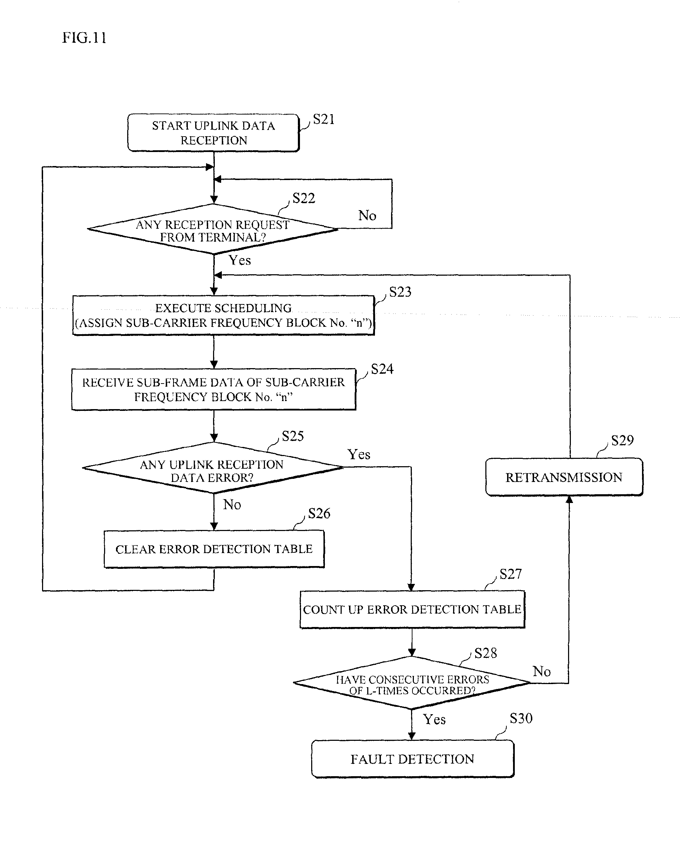

### [2] Fault detection in receiving system: Figs.11-13

### *Embodiment (1): Fig.11

In this embodiment, the receiving circuit 111 determines or checks at the decoder 11_3 whether or not there is a reception request from the mobile terminal 2 through the antenna ANT11r and the modulator 11_1 (steps S21 and S22). As a result, in the presence of the reception request from the mobile terminal 2, the modulator 11_3 executes the scheduling together with the uplink scheduler 11_9 (step S23), at which time the sub-carrier frequency block No."n" is assigned as with the case of the downlink scheduler 11_10.

When the sub-carrier frequency block No."n" is thus assigned, the decoder 11_3 receives the sub-frame data of the block No."n" (step S24), determines whether or not a bit error occurs in the sub-frame data received (step S25) and clears the error detection table (see Fig.6 etc.) in the absence of occurrence of data errors (step S26).

However, when it is found that an error occurs in the uplink reception data, the demodulator 11_3 counts up the error detection table as with the error detection table in Fig.6 (step S27), determines whether or not it occurs for the number of consecutive times L (step S28) and executes the HARQ processing in the absence of error occurrence for the number of consecutive times L (step S29) while the fault detection is determined as with the embodiment in Fig.5 in the presence of the error occurrence for the number of consecutive times L (step S30).

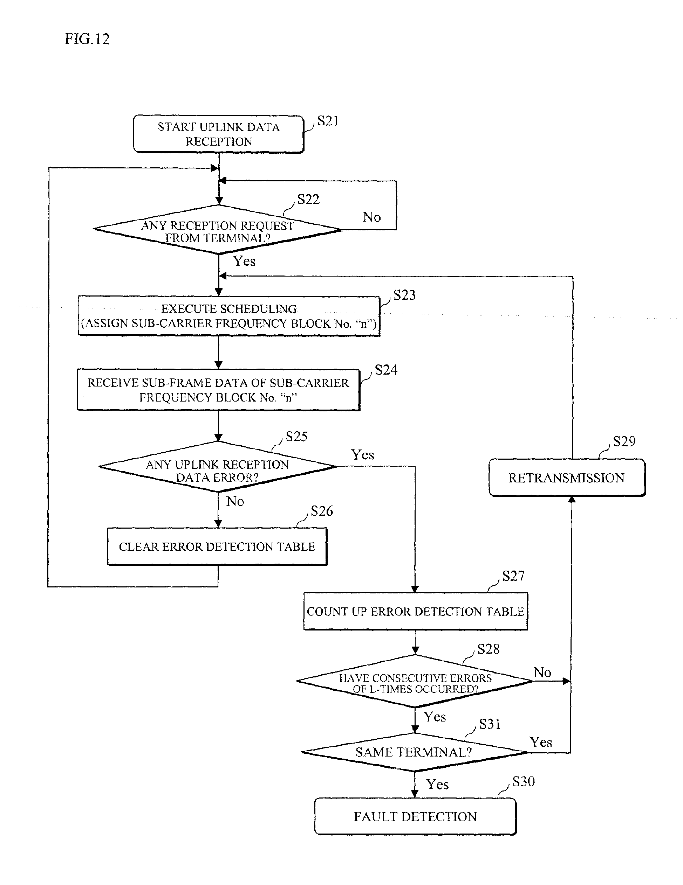

### *Embodiment (2): Fig.12

This embodiment is added with step S30 in the embodiment depicted in Fig.11.

Namely, this is the same as the case where the embodiment in Fig.5 is modified into the embodiment depicted in Fig.7, where even when the reception data error occurrence for the number of consecutive times L is detected at step S28, the demodulator 11_3 determines whether or not it is based on the same mobile terminal from the error detection table depicted in Fig.8 in order to exclude the error detection due to the same mobile terminal and then performs the fault detection (step S31, S30).

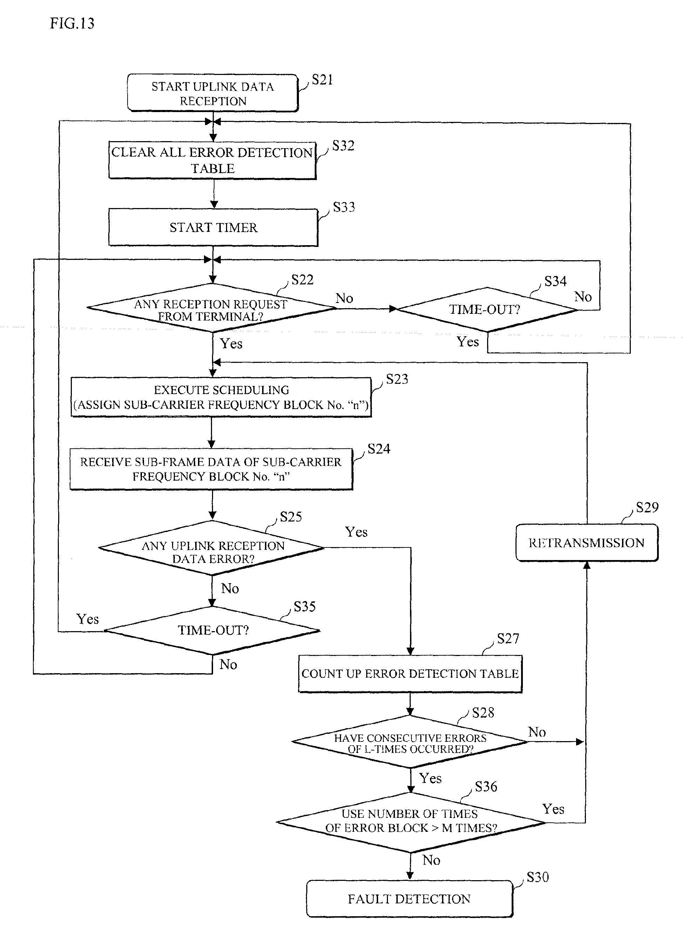

### *Embodiment (3): Fig.13

This embodiment is added with steps S32-S36 in the flow chart of Fig.11, where these steps S32-S36 correspond to steps S13-S17 depicted in Fig.9, respectively.

Namely, after the error detection table is cleared at step S32 and the timer is started at step S33, it is determined whether or not the timer is timed out at steps S34 and S35 and the error detection table is counted up (step S27), so that the decoder 11_3 performs the HARQ processing when the use number of times of the sub-carrier frequency block as erred exceeds the number of times M even when the error detection occurs for the number of consecutive times L (step S29) and determines it as the fault detection only when the use number of times falls below the number of times M (step S30).

### *Modified example

After the fault detection in the above respective embodiments being made (step S11), a sub-carrier frequency block with a fault having occurred may not be assigned in the scheduling at step S3, thereby enabling an effective scheduling.

It is also to be noted that the present invention is not limited by the above-mentioned embodiments, and it is obvious that various modifications may be made by one skilled in the art based on the recitation of the claims.

### Brief description of the drawings

Fig.1 is a block diagram depicting a cellular mobile telephone system generally known in the art;
Fig.2 is a block diagram depicting an arrangement of a base station apparatus to which the present invention is applied;
Fig.3 is a block diagram depicting an arrangement of a mobile terminal generally known in the art;
Fig.4 is an image diagram depicting sub-carrier frequency blocks as resource blocks in a receiving circuit or a transmitting circuit used in the present invention;
Fig.5 is a flow chart depicting an embodiment (1) of a transmitting system of a fault detection method and apparatus of wireless resource according to the present invention;
Fig.6 is a diagram depicting an error detection table example used in Fig.5;
Fig.7 is a flow chart depicting an embodiment (2) of a transmitting system of a fault detection method and apparatus of wireless resource according to the present invention;
Fig.8 is a diagram depicting an error detection table example used in Fig.7;
Fig.9 is a flow chart depicting an embodiment (3) of a transmitting system of a fault detection method and apparatus of mobile resource according to the present invention;
Fig.10 is a diagram depicting an error detection table example used in Fig.9;
Fig.11 is a flow chart depicting an embodiment (1) of a receiving system of a fault detection method and apparatus of wireless resource according to the present invention;
Fig.12 is a flow chart depicting an embodiment (2) of a receiving system of a fault detection method and apparatus of wireless resource according to the present invention; and
Fig.13 is a flow chart depicting an embodiment (3) of a receiving system of a fault detection method and apparatus of wireless resource according to the present invention.

### Description of reference numerals or symbols

1 Base station apparatus
2 Mobile terminal
3 Upper apparatus
11, 12...1x, 21 Baseband signal processor
11_1, 12_1, 21_1 Demodulator
11_2, 12_2, 21_2 Fast Fourier Transform (FFT) portion
11_3, 12_3, 21_3 Decoder
11_4, 11_5, 12_4, 12_5, 21_4, 21_5 Hybrid Automatic Repeat reQuest (HARQ) processor
11_6, 12_6, 21_6 Encoder
11_7, 12_7, 21_7 Inverse Fast Fourier Transform (IFFT) portion
11_8, 12_8, 21_8 Modulator
11_10, 12_10 Uplink scheduler
11_11, 12_12 Downlink scheduler
12, 22 Common controller
13, 23 Switch portion
14 Transmission line interface
15 Base station controller
24 External interface
25 Display operation unit
26 Mobile terminal controller
ANT11r, ANT11s...ANT1xr, ANT11xs, ANT21r, ANT21s Antenna NW1 Mobile telephone network
NW2 Public network/IP network

Throughout the figures, the same reference numerals or symbols indicate the same or corresponding parts.

## Claims

1. A fault detection method of wireless resource comprising:
assigning a sub-carrier frequency block forming a wireless resource to a downlink transmission data by scheduling based on a wireless communication system enabling a plurality of users to dynamically utilize the wireless resource;
transmitting sub-frame data in the sub-carrier frequency block assigned;
recording as an error detection a retransmission request signal received in response to the transmitting of the sub-frame data; and
determining that a fault occurs at a specific sub-carrier frequency block when the error detection recorded consecutively occurs at the specific sub-carrier frequency block.

2. A fault detection method of wireless resource comprising:
assigning a sub-carrier frequency block forming the wireless resource to an uplink reception data in response to a reception request by scheduling based on a wireless communication system enabling a plurality of users to dynamically utilize the wireless resource;
receiving sub-frame data in the reception data at the sub-carrier frequency block assigned;
recording an error detection in the sub-frame data received; and
determining that a fault occurs at a specific sub-carrier frequency block when the error detection recorded consecutively occurs at the specific sub-carrier frequency block.

3. The fault detection method of a wireless resource as claimed in claim 1 or 2, wherein the determining determines that a fault does not occur when a mobile terminal using the specific sub-carrier frequency block is a same terminal even though the error detection continues for a fixed time duration or a fixed number of times at the specific sub-carrier frequency block.

4. The fault detection method of a wireless resource as claimed in claim 1 or 2, wherein the determining determines that a fault does not occur when a use number of times of the specific sub-carrier frequency block is equal to or more than a fixed number of times even though the error detection continues for a fixed time duration or a fixed number of times at the specific sub-carrier frequency block.

5. The fault detection method of a wireless resource as claimed in any one of claims 1-4, further comprising not assigning the specific sub-carrier frequency block faulted in the scheduling after having detected the specific sub-carrier frequency block where a fault occurs.

6. The fault detection method of a wireless resource as claimed in any one of claims 1-5, wherein the wireless communication method comprises OFDMA method.

7. A fault detection apparatus of wireless resource comprising:
an assigning portion assigning a sub-carrier frequency block forming a wireless resource to a downlink transmission data by a scheduling based on a wireless communication system enabling a plurality of users to dynamically utilize the wireless resource;
a transmitting portion transmitting sub-frame data in the sub-carrier frequency block assigned;
a recording portion recording as an error detection a retransmission request signal received in response to the transmitting of the sub-frame data; and
a determining portion determining that a fault occurs at a specific sub-carrier frequency block when the error detection recorded consecutively occurs at the specific sub-carrier frequency block.

8. A fault detection apparatus of wireless resource comprising:
an assigning portion assigning a sub-carrier frequency block forming the wireless resource to an uplink reception data in response to a reception request by scheduling based on a wireless communication system enabling a plurality of users to dynamically utilize the wireless resource;
a receiving portion receiving sub-frame data in the reception data at the sub-carrier frequency block assigned;
a recording portion recording an error detection in the sub-frame data received; and
a determining portion determining that a fault occurs at a specific sub-carrier frequency block when the error detection recorded consecutively occurs at the specific sub-carrier frequency block.

9. The fault detection apparatus of a wireless resource as claimed in claim 7 or 8, wherein the determining portion determines that a fault does not occur when a mobile terminal using the specific sub-carrier frequency block is a same terminal even though the error detection continues for a fixed time duration or a fixed number of times at the specific sub-carrier frequency block.

10. The fault detection apparatus of a wireless resource as claimed in claim 7 or 8, wherein the determining portion determines that a fault does not occur when a use number of times of the specific sub-carrier frequency block is equal to or more than a fixed number of times even though the error detection continues for a fixed time duration or a fixed number of times at the specific sub-carrier frequency block.

11. The fault detection apparatus of a wireless resource as claimed in any one of claims 7-10, further comprising a portion not assigning the specific sub-carrier frequency block faulted in the scheduling after having detected the specific sub-carrier frequency block where a fault occurs.

12. The fault detection apparatus of a wireless resource as claimed in any one of claims 7-11, wherein the wireless communication method comprises OFDMA method.
